(19) Europäisches Patentamt
European Patent Office
Office européen des brevets

(11) **EP 1 646 262 B1**

(12) **FASCICULE DE BREVET EUROPEEN**

(45) Date de publication et mention
de la délivrance du brevet:
**18.11.2015 Bulletin 2015/47**

(51) Int Cl.:
***H04Q 11/00*** *(2006.01)* ***H04J 14/02*** *(2006.01)*

(21) Numéro de dépôt: **05108435.8**

(22) Date de dépôt: **14.09.2005**

(54) **Dispositif de commutation optique reconfigurable**

Rekonfigurierbarer optischer Schalter

A reconfigurable optical switch

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **17.09.2004 FR 0452078**

(43) Date de publication de la demande:
**12.04.2006 Bulletin 2006/15**

(73) Titulaire: **ALCATEL LUCENT
92100 Boulogne-Billancourt (FR)**

(72) Inventeurs:
• **Zami, Thierry
91300 Massy (FR)**
• **Jourdan, Amaury
92310 Sevres (FR)**
• **Douville, Richard
91310 Longpont sur Orge (FR)**

(74) Mandataire: **Sciaux, Edmond et al
Alcatel-Lucent International
148/152 route de la Reine
92100 Boulogne-Billancourt (FR)**

(56) Documents cités:
**EP-A- 0 711 093** **EP-A- 1 054 572**
**US-A1- 2002 021 467** **US-B1- 6 414 766**

• DUCELLIER T ET AL: "THE MWS 1x4: A HIGH
PERFORMANCE WAVELENGTH SWITCHING
BUILDING BLOCK" ECOC 2002. 28TH.
EUROPEAN CONFERENCE ON OPTICAL
COMMUNICATION. COPENHAGEN, DENMARK,
SEPT. 8 - 12, 2002, EUROPEAN CONFERENCE ON
OPTICAL COMMUNICATION.(ECOC), vol. VOL. 1
OF 4 CONF. 28, 9 septembre 2002 (2002-09-09),
page 231, XP001158349

## Description

L'invention se situe dans le domaine des réseaux de transmission optique utilisant le multiplexage en longueurs d'onde. Elle concerne les dispositifs de commutation optiques utilisables dans les noeuds de routage prévus dans ces réseaux.

L'invention a trait plus particulièrement aux commutateurs optiques reconfigurables qui, recevant par des ports d'entrée une pluralité de signaux multiplex (ou "WDM", de l'anglais "Wavelength Division Multiplexing") ont pour fonction d'aiguiller individuellement les canaux spectraux (ou plus simplement longueurs d'onde) constituant les signaux WDM reçus vers des ports de sortie respectifs sélectionnés en fonction d'une commande. L'invention a trait également aux commutateurs aptes à réaliser les opérations inverses, c'est-à-dire permettant à partir de signaux mono-longueur d'onde reçus de former sur des ports de sortie une pluralité de signaux WDM, chaque signal WDM étant constitué d'une combinaison sélectionnée en fonction d'une commande de ces signaux mono-longueur d'onde reçus.

Les commutateurs considérés ici sont du type transparent, c'est-à-dire dans lesquels les canaux restent dans le domaine optique.

Des commutateurs de ce type sont avantageusement utilisés dans les noeuds de routage, en tant qu'interfaces reconfigurables d'entrée ou de sortie de commutateurs électroniques.

Une telle interface est généralement appelée "panneau d'interconnexion" ("patch panel" en anglais). Celui d'entrée réalise une séparation spatial des différents canaux WDM reçus à partir de plusieurs fibres optiques d'entrée et un aiguillage de tous ces canaux vers des ports de sortie respectifs. Les ports de sortie communiquent respectivement avec des bornes d'entrée du commutateur électronique par l'intermédiaire d'une interface de conversion "optique-électrique" constituée de récepteurs optiques, typiquement des photodétecteurs.

Le panneau d'interconnexion de sortie comporte des ports d'entrée qui communiquent respectivement avec des bornes de sortie du commutateur électronique par l'intermédiaire d'une interface de conversion "électrique-optique" constituée d'émetteurs de signaux optiques mono-longueur d'onde, typiquement des sources laser modulées. Ces signaux deviennent des canaux de signaux WDM grâce au panneau d'interconnexion de sortie qui réalise l'aiguillage de ces signaux mono-longueur d'onde émis et leurs combinaisons par groupes pour former des multiplex sur des ports de sortie respectifs. Les ports de sortie sont couplés à des fibres optiques de sortie respectives.

Pour une utilisation optimale des ressources spectrales dans un réseau, il est souhaitable que les panneau d'interconnexion permettent une certaine flexibilité, c'est-à-dire soient au moins partiellement reconfigurables par une simple commande. En effet, concernant d'abord le panneau d'interconnexion d'entrée, il est clair que le nombre maximal de canaux reçus pouvant être traités par un noeud est imposé par le nombre de bornes d'entrée du commutateur électronique (du moins celles qui sont en service à une époque donnée). Il en résulte une même limitation du nombre de canaux utilisables simultanément dans l'ensemble des fibres du réseau en amont du noeud. Or, pour bien utiliser ces ressources limitées, il convient de pouvoir modifier leur répartition parmi les fibres, c'est-à-dire pouvoir diminuer le nombre de canaux attribués à une fibre où le trafic décroît au profit d'une autre fibre où le trafic tend à devenir saturé.

Ceci implique qu'au moins un des récepteurs qui reçoit initialement un certain canal et issu d'une certain fibre puisse ensuite recevoir à la place un canal attribué en supplément à une autre fibre et issu de celle-ci. Avec un panneau d'interconnexion non reconfigurable, de telles redistributions de canaux parmi les fibres ne sont pas possibles sans manipulations physiques d'éléments du panneau par un technicien. Le panneau d'interconnexion de sortie suscite un besoin analogue. Le nombre maximal de canaux émis est ici imposé par le nombre de bornes de sortie actives du commutateur électronique (généralement le même nombre que celui des bornes d'entrée). Comme les fibres de sortie correspondent généralement à des destinations différente et doivent véhiculer des trafics respectifs pouvant évoluer fortement, il convient aussi de pouvoir modifier par une simple commande les nombres de canaux respectivement injectés dans les fibres des sortie.

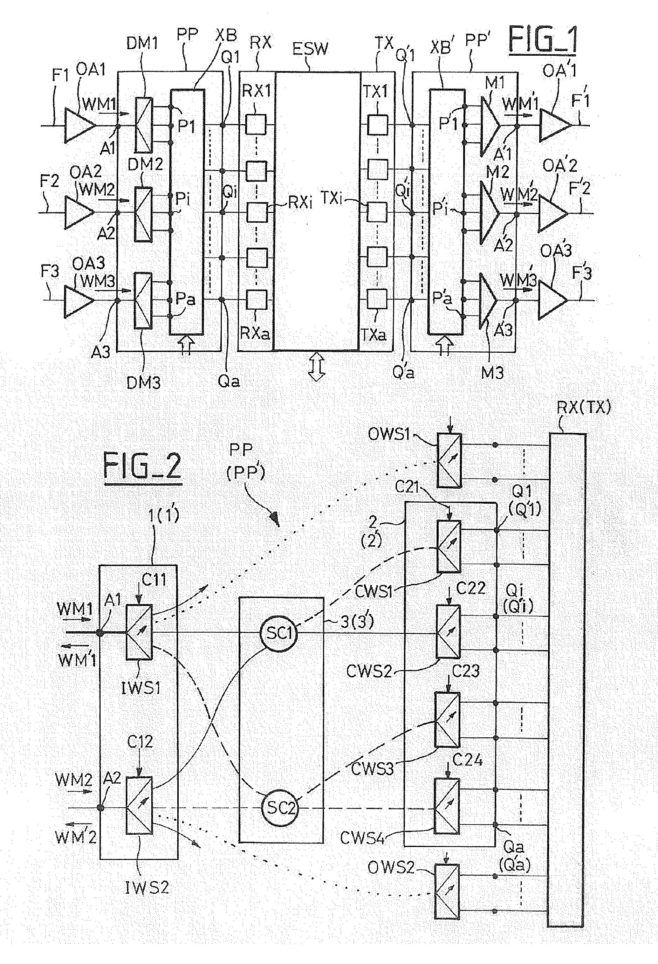

Une solution connue pour réaliser ces fonctions est représentée schématiquement à la figure 1 illustrant le cas particulier d'un noeud de routage couplé à trois fibres optiques d'entrée et trois fibres optiques de sortie. On y retrouve les éléments relatifs à un noeud de routage qui viennent d'être mentionnés, successivement :

- les fibres optiques d'entrée F1-F3 qui apportent respectivement les multiplex d'entrée WM1-WM3 par l'intermédiaire d'amplificateurs optiques d'entrée OA1-OA3;
- le panneau d'interconnexion d'entrée PP ayant des ports d'entrée A1-A3 couplés respectivement aux sorties des amplificateurs OA1-OA3, et des ports de sortie Q1,...Qi,...Qa;
- l'interface de conversion "optique-électrique" RX constituée de récepteurs optiques RX1,...RXi,...RXa couplés respectivement aux ports de sortie Q1,...Qi,...Qa du panneau d'interconnexion PP;
- le commutateur électronique ESW;
- l'interface de conversion "électrique-optique" TX constituée d'émetteurs optiques TX1,...TXi,...TXa (dans le cas particulier mais usuel où les nombres de récepteurs et d'émetteurs sont égaux);
- le panneau d'interconnexion de sortie PP' ayant des ports d'entrée Q'1,...Q'i,...Q'a couplés respectivement aux sorties des émetteurs TX1,...TXi,...TXa, et des ports de sortie A'1-A'3;
- les fibres optiques de sortie F'1-F'3 qui reçoivent des ports de sortie A'1-A'3 des multiplex de sortie WM'1-WM'3 par l'intermédiaire d'amplificateurs optiques de sortie OA'1-0A'3 dont les entrées sont couplés respectivement aux ports de sortie A'1-A'3. Pour réaliser la flexibilité recherchée en amont du noeud, le panneau d'interconnexion d'entrée PP utilise un premier étage constitués de démultiplexeurs optiques DM1-DM3 couplés respectivement aux fibres d'entrée, suivi d'un commutateur spatial XB. Avec des démultiplexeurs de type classique, c'est-à-dire prévus chacun pour fournir sur leurs sorties les différents canaux composant le multiplex qu'ils reçoivent, la flexibilité maximale est obtenue si le commutateur spatial XB est de type "cross-bar" permettant de coupler sélectivement, en fonction d'une commande (non référencée), chaque sortie P1,...Pi,...Pa des démultiplexeurs à l'un quelconque de ses ports de sortie Q1,...Qi,...Qa. On peut aussi prévoir une flexibilité partielle en utilisant un commutateur spatial plus petit ne recevant qu'une partie des canaux séparés par les démultiplexeurs, les autres canaux étant alors guidés directement vers des récepteurs respectifs dédiés.

De la même façon, pour réaliser la flexibilité recherchée en aval du noeud, le panneau d'interconnexion de sortie PP' utilise un commutateur spatial XB' suivi d'un deuxième étage constitués de coupleurs optiques M1-M3 couplés respectivement aux fibres de sortie. La flexibilité maximale est aussi obtenue si le commutateur spatial XB' est de type "cross-bar" permettant de coupler sélectivement chaque sortie d'émetteur depuis ses ports d'entrée Q'1,...Q'i,...Q'a vers l'une quelconque des entrées P'1,...P'i,...P'a des coupleurs M1-M3. On peut aussi prévoir une flexibilité partielle en utilisant un commutateur spatial plus petit recevant les signaux issus d'une partie seulement des émetteurs, les autres signaux étant alors guidés directement vers des coupleurs respectifs.

L'inconvénient de cette solution est son absence de modularité. En effet, un noeud de réseau est prévu pour atteindre une capacité de commutation nominale donnée, mais en début d'exploitation du réseau, toute cette capacité n'est pas utilisée. Au fur et à mesure de l'augmentation des besoins, on effectue des mises à niveau ("upgrading" en anglais) en mettant en service de nouvelles longueurs d'onde dans les fibres initialement utilisées et/ou de nouvelles fibres. Le caractère non modulaire du montage oblige soit d'installer dès le début d'exploitation un commutateur spatial dimensionné pour la capacité nominale, mais surdimensionné pour les besoins initiaux, soit d'accepter une dégradation du taux de flexibilité lorsqu'on augmente la capacité. Or, il est au contraire souhaitable d'adapter en permanence le coût et les performances d'un tel équipement à l'exploitation commerciale qui en est faite.

L'invention vise à remédier à cet inconvénient en proposant une nouvelle structure de commutateur optique utilisable comme panneau d'interconnexion reconfigurable, à la fois d'entrée et de sortie, et qui soit modulaire de façon à pouvoir faire évoluer ses performances en proportion de son coût, "performances" désignant ici sa capacité à traiter un certain nombre de canaux admis en entrée pour un certain nombre de fibres, sans dégrader le taux de flexibilité, c'est-à-dire le rapport du nombre de canaux pouvant être réattribués entre fibres au nombre moyen de canaux véhiculé par fibre.

EP 1 054 572 A décrit des brasseurs optiques d'achitecture extensible à trois sections. Des commutateurs spatiaux et des coupleurs sont utilisés. US 2002/021467 A décrit un système de commutation synchrone pour réseau WDM employant des multiplexeurs et démultiplexeurs fixes.

Dans ce but, l'invention utilise comme élément de base un composant optique proposé par divers fournisseurs et connu sous l'appellation anglaise de "wavelength selection switch" ou "wavelength switch module". Une description d'un tel composant a été donnée par exemple lors de la conférence ECOC'2002, Copenhague, 9 septembre 2002, document 2.3.1, intitulé "The MWS 1x4 : A High Performance Wavelength Switching Building Block", par T. Ducellier et al.

Il est rappelé que ce composant peut être utilisé pour effectuer des fonctions de type "démultiplexage" ou de type "multiplexage" selon le sens de propagation des signaux. Dans le premier cas, un port de ce composant constitue une entrée et plusieurs autres ports constitue des sorties. Il permet alors d'aiguiller des canaux spectraux d'un multiplex reçu sur son entrée, sélectivement en fonction de leurs longueurs d'onde respectives et en fonction d'un signal de commande, vers des sorties respectives de ce module.

Ce composant réalise ainsi une fonction de démultiplexage programmable permettant de fournir sur une sortie quelconque choisie soit un canal sélectionné parmi les canaux du multiplex reçu, soit un multiplex de sortie constitué d'un ensemble de canaux sélectionnés parmi les canaux du multiplex reçu. Il présente les particularités d'être capable de prendre en compte un grand nombre de canaux reçus, mais possède un nombre restreint de sorties, typiquement 4 ou 8 actuellement. On peut toutefois augmenter ce nombre en cascadant plusieurs de ces composants selon une structure en arbre. Dans la suite, un tel composant ou assemblage de composants équivalant à un composant ayant un plus grand nombre de sorties sera désigné par "module de sélection de longueurs d'onde" ou plus simplement "module de sélection".

Le même "module" peut aussi réaliser la fonction inverse en échangeant les rôles des sorties et de l'entrée. Dans ce cas, il devient un composant comportant plusieurs entrées et une sortie et permet d'aiguiller des canaux spectraux (c'est-à-dire des signaux optiques portés par des longueurs d'onde respectives) reçus sur des entrées respectives, sélectivement en fonction des longueurs d'onde des canaux reçus et des entrées respectives et en fonction d'un signal de commande, vers la sortie de ce module.

Il convient bien entendu que les canaux spectraux aiguillés vers la sortie aient des longueurs d'onde différentes. Le module réalise alors une fonction de multiplexage programmable permettant de fournir en sortie un canal sélectionné parmi les canaux reçus ou un multiplex de sortie constitué d'un ensemble de canaux sélectionnés parmi les canaux reçus.

Plus précisément, l'invention a pour objet un dispositif de commutation optique selon la revendication 1.

La solution de la revendication 1 présente les avantages de permettre une flexibilité dans l'attribution des longueurs d'onde utilisables dans au moins deux fibres, tout en étant de structure modulaire et donc de coût limité au début de l'exploitation. Par ailleurs, du fait que les transferts de signaux entre composants du dispositif peuvent se faire dans chaque liaison de couplage par ensembles de canaux, le nombre d'interconnexions à prévoir entre composants reste relativement limité.

Selon une première possibilité d'évolution, on prévoira en outre que le second étage comprend un second module de sélection et que l'étage intermédiaire réalise un couplage de l'entrée du second module de sélection du second étage à la fois à une seconde sortie du premier module de sélection du premier étage et à une seconde sortie du second module de sélection du premier étage.

Dans cette variante, le fait de prévoir un double couplage de deux modules de sélection du premier étage avec deux modules de sélection du second étage permet d'augmenter le nombre de longueurs d'onde attribuables sélectivement aux deux fibres.

Selon une possibilité de réalisation permettant au dispositif de supporter un plus grand nombre total de canaux et donc des mises en service de longueurs d'onde supplémentaires, l'étage intermédiaire comporte des premier et second coupleurs en étoile ayant chacun plusieurs entrées et plusieurs sorties, et

- lesdites premières sorties desdits premier et second modules de sélection du premier étage sont couplées respectivement à deux entrées du premier coupleur,
- lesdites secondes sorties desdits premier et second modules de sélection du premier étage sont couplées respectivement à deux entrées du second coupleur, et
- chaque sortie de chaque coupleur est couplée à une entrée d'un module de sélection associé du second étage.

Selon une autre possibilité de réalisation deux au moins desdits modules de sélection du second étage associés à un même coupleur sont conçus pour traiter des bandes de longueurs d'onde disjointes.

Cette dernière variante permet d'utiliser des modules de sélection de longueurs d'onde apte à traiter chacun des bandes longueurs d'onde moins larges ou moins denses que la bande totale de longueurs d'onde utilisé dans le réseau, ce qui à un impact bénéfique sur leur coût.

Dans le cas général, le dispositif sera relié à un nombre n quelconque de fibres d'entrée. Dans ce cas, on prévoira avantageusement que le premier étage comprend au moins n modules de sélection, que le second étage comprend au moins s modules de sélection, et que l'étage intermédiaire comporte au moins s coupleurs en étoile ayant chacun au moins n entrées et au moins une sortie associée à l'un des s modules de sélection du second étage, et qu'en outre :

- chaque sortie de chaque coupleur est couplée à une entrée d'un module de sélection associé du second étage, et
- n entrées de chaque coupleur sont couplées à n sorties respectives de n modules de sélection distincts du premier étage, chacune de ces sorties étant couplée à une entrée d'un seul coupleur.

L'invention a aussi pour objet un dispositif de commutation prévu pour effectuer les opérations inverses, c'est-à-dire pour recevoir des signaux d'entrée portés par des longueurs d'onde respectives et les aiguiller sélectivement vers des ports de sortie respectifs sélectionnés en fonction d'une commande. Le dispositif permet donc de former sur ses ports de sortie des signaux multiplex constitués chacun par une combinaison choisie de signaux mono-longueurs d'onde reçus en entrée.

Dans ce cas, la struture du dispositif reste identique au cas précédent, mais son mode d'utilisation diffère : le sens de propagation des signaux est inversé, les signaux de sortie deviennent alors les signaux d'entrée et réciproquement, les sorties ou les ports de sortie deviennent les entrées ou les ports d'entrée et reciproquement, et le second étage devient le premier étage et reciproquement. Plus précisément, le dispositif de commutation optique est spécifié dans la revendication 6.

Dans ce dernier mode d'utilisation, on retrouve les mêmes variantes et possibilités d'évolution que pour le premier mode d'utilisation. Ces variantes ne seront explicitées, sachant qu'elles se déduisent des variantes déjà décrites en échangeant simplement les rôles des entrées et des sorties.

Optionnellement, une partie des modules de sélection du premier étage peuvent être remplacés par de simples multiplexeurs. Cette variante est intéressante si on peut se passer de la possibilité de modifier les longueurs d'onde d'émission des émetteurs TX. Dans ce cas, il serait inutile prévoir des modules de sélection dont les fonctions spécifiques ne seraient pas utilisées. Le choix de multiplexeurs est alors préférable en particulier car ils introduisent moins de pertes optiques que les modules de sélection pour un nombre de ports d'entrée donné.

L'invention concerne également un noeud de commutation pour réseau de transmission optique dans lequel sont couplés en cascade un panneau d'interconnexion d'entrée, une interface de conversion "optique-électrique", un commutateur électronique, une interface de conversion "électrique-optique" et un panneau d'interconnexion de sortie. Le panneau d'interconnexion d'entrée et/ou de sortie est (sont) alors conforme(s) à la description qui précède.

L'invention concerne enfin un réseau de transmission optique comportant au moins un tel noeud de commutation.

D'autres aspects et avantages de l'invention apparaîtront dans la suite de la description en référence aux figures.

- La figure 1 commentée précédemment représente un noeud de routage selon l'état de la technique.
- La figure 2 représente un dispositif de commutation optique selon l'invention, et son évolution à partir d'une configuration minimale.
- La figure 3 représente un dispositif de commutation optique selon l'invention dans une configuration optimale, après mises à niveau.

La figure 2 montre un exemple de structure du dispositif de commutation selon l'invention. Celle-ci est utilisable comme panneau d'interconnexion d'entrée ou de sortie. Etant donné que les deux cas se distinguent seulement par des sens de propagation opposés des signaux optiques, les éléments constitutifs de la structure seront mentionnés et référencés essentiellement pour le cas du panneau d'interconnexion d'entrée. Pour des raisons de cohérence avec la figure 1, certains éléments concernant le panneau d'interconnexion de sortie sont aussi référencés entre parenthèses.

On va expliquer maintenant la façon de faire évoluer la constitution du dispositif de commutation en fonction l'augmentation des besoins.

Dans l'exemple représenté, on considère que le dispositif PP n'est relié au départ qu'à deux fibres d'entrée qui apportent respectivement deux signaux multiplex d'entrée WM1, WM2 constitués chacun de canaux spectraux portés par des longueurs d'onde respectives. Les longueurs d'onde utilisables dans chacune des fibres appartiendront généralement à un peigne standard de longueurs d'onde prédéfini. Toutefois, nous ne considérerons dans la suite que celles supportées par le dispositif, c'est-à-dire par les modules de sélection choisis. Ceci n'exclut cependant pas que les fibres puissent utiliser d'autres longueurs d'onde, mais elles devraient être traitées par un autre dispositif adapté.

Un premier étage 1 comprend deux modules de sélection IWS1, IWS2 dont les entrées constituent respectivement des ports d'entrée A1, A2 du dispositif de commutation, ceux-ci recevant respectivement les signaux multiplex WM1, WM2. Un second étage 2 comprend des modules de sélection CWS1, CWS2, CWS3, CWS4 dont les sorties constituent respectivement des ports de sortie Q1,...Qi,...Qa du dispositif de commutation. Dans l'application comme panneau d'interconnexion d'entrée, ces ports de sortie sont couplées à des récepteurs respectifs d'une interface de conversion "optique-électrique" RX mentionnée précédemment.

Un étage intermédiaire 3 schématisé ici par des coupleurs en étoile SC1, SC2 et des liaisons optiques (non référencées) va permettre des couplages entre les entrées de modules de sélection du second étage et des sorties de modules de sélection du premier étage.

Pour obtenir une flexibilité dans l'attribution des longueurs d'onde susceptibles de porter les canaux véhiculés par les fibres, on peut déjà prévoir un seul coupleur, par exemple SC1, dont on utilise deux entrées et une sortie, ces deux entrées étant reliées respectivement à une première sortie du module de sélection IWS1 et à une première sortie du module de sélection IWS2. La sortie du coupleur est par ailleurs reliée à l'entrée du module de sélection CWS2. On réalise ainsi le couplage de l'entrée du module CWS2 à la fois à une sortie du module IWS1 et à une sortie du module IWS2.

Avec cette disposition, et compte tenu des propriétés des modules de sélection, n'importe quelle longueur d'onde de chacune des fibres peut être dirigée vers n'importe quelle sortie du module CWS2, donc vers n'importe quel récepteur. Toutefois, il faut que le nombre de longueurs d'onde dirigées vers le coupleur ne dépasse pas le nombre de sorties du module CWS2. Il en résulte que pour chaque fibre, les longueurs d'onde restantes ne peuvent pas être traitées comme des ressources échangeables entre fibres. Ces longueurs d'onde peuvent cependant être aiguillées à partir d'autres sorties des modules de sélection IWS1, IWS2 du premier étage vers des récepteurs dédiés, soit directement, soit par l'intermédiaire de modules de sélection OWS1, OWS2 du second étage, comme représenté sur la figure (liaisons représentées par des lignes en pointillés).

Pour palier à la limitation du nombre de longueurs d'onde échangeables, une première évolution du dispositif consiste à prévoir dans le second étage 2 un second module de sélection CWS3 et dans étage intermédiaire 3 un second coupleur CS2. On réalise alors le couplage de l'entrée du second module de sélection CWS3 à la fois à une seconde sortie du module IWS1 et à une seconde sortie du module IWS2 (liaisons représentées par des lignes en tirets longs). Si les modules CWS2 et CWS3 sont identiques, on double ainsi le nombre de longueurs d'onde échangeables.

On peut noter que les modules de sélection IWS1, IWS2 doivent être commandés chacun de façon à aiguiller vers un même coupleur des ensembles disjoints de longueurs d'onde, mais ceci ne constitue pas une limitation dans la flexibilité d'affectation des longueurs d'onde aux fibres.

Etant donné que le nombre total de canaux commutables par le dispositif est limité par le nombre total des sorties des modules du second étage 2 et que le nombre de sorties d'un module est limité, un second type d'évolution du dispositif va permette d'augmenter ce nombre total de canaux en cas de besoin, par exemple suite à des mises en service de longueurs d'onde supplémentaires. Il suffit pour cela d'installer dans le second étage des modules de sélection supplémentaires, par exemple CWS1, CWS4, et que l'on ait prévu des coupleurs en étoile SC1, SC2 ayant chacun plusieurs entrées et plusieurs sorties.

Comme auparavant les premières sorties des modules IWS1, IWS2 sont couplées respectivement à deux entrées du premier coupleur SC1, et leurs secondes sorties à deux autres entrées du second coupleur SC2. En outre, chaque sortie de chaque coupleur est couplée à une entrée d'un module de sélection associé du second étage (liaisons représentées par des lignes en tirets courts).

Dans ce cas, il est avantageux que des modules de sélection du second étage associés à un même coupleur soient adaptés à traiter des bandes de longueurs d'onde disjointes, typiquement des bandes de longueurs d'onde adjacentes ou des bandes de longueurs d'onde entrelacées. Ceci permet en effet, d'utiliser des modules plus simples de conception donc moins coûteux.

Un troisième type d'évolution du dispositif vise à prendre en compte une augmentation du nombre de fibres d'entrée. Pour cela, il suffit d'installer dans le premier étage des modules de sélection supplémentaires et de réaliser des couplages appropriés de ses sorties vers des entrées des modules de sélection du second étage. On peut aussi installer dans le second étage des modules de sélection supplémentaires permettant la flexibilité maximale.

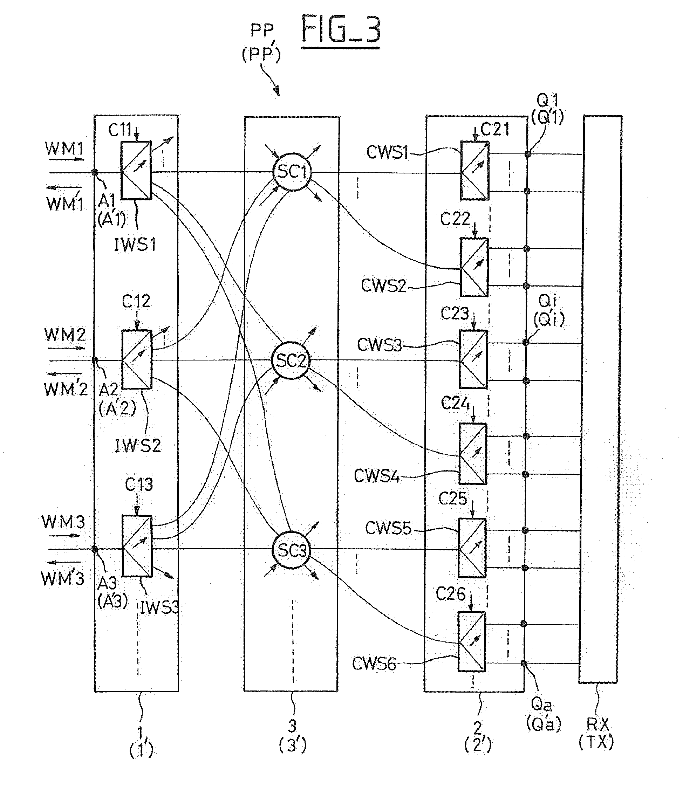

On aboutit alors à une structure optimale telle que représentée à la figure 3, dans le cas particulier de trois fibres d'entrée.

Dans le cas général pour n fibres d'entrée, le premier étage comprend n modules (ici trois modules IWS1-IWS3), le second étages comprend s modules (ici huit modules CWS1-CWS8). L'étage intermédiaire comporte k coupleurs en étoile (ici trois coupleurs SC1, SC2, SC3) ayant chacun au moins n entrées et au moins une sortie associée à l'un des modules de sélection du second étage. Chaque sortie de chaque coupleur est couplée à une entrée d'un module de sélection associé du second étage et n entrées de chaque coupleur sont couplées à n sorties respectives de n modules de sélection distincts du premier étage, chacune des ces sorties étant couplée à une entrée d'un seul coupleur.

Bien entendu, le nombre s de modules du second étage à prévoir et le nombre r de sortie de chaque coupleur dépendra du nombre total de canaux à traiter et du nombre de sorties que possèdent ces modules.

On peut résumer comme suit les règles de dimensionnement pour une structure optimale dans le cas où les modules du premier étage ont chacun p sorties et où les modules du second étage ont chacun q sorties.

En désignant par c le nombre de longueurs d'onde utilisées dans le réseau, on aura

$$c.n = s.q$$

$$k = p$$

$$k.r = s$$

Concernant l'application du dispositif en tant que panneau d'interconnexion de sortie PP', la même structure est utilisable en échangeant simplement les rôles des entrées et des sorties et en remplaçant l'interface de conversion "optique-électrique" RX par l'interface de conversion "électrique-optique" TX. Le changement de mode d'utilisation qui en résulte est alors évident et il est donc superflu d'expliciter davantage ce dernier cas.

Toutefois, comme déjà signalé précédemment, pour cette application certains des modules de sélection du premier étage peuvent le cas échéant être remplacés par de simples multiplexeurs.

## Revendications

1. Dispositif de commutation optique (PP) pour aiguiller sélectivement des canaux spectraux reçus par des ports d'entrée vers des ports de sortie respectifs sélectionnés en fonction d'une commande, comportant :

- des ports d'entrée (A1, A2, A3) prévus pour recevoir respectivement des signaux optiques multiplex d'entrée (WM1, WM2, WM3) constitués chacun de canaux spectraux portés par des longueurs d'onde respectives,
- des ports de sortie (Q1,...Qi,...Qa),
- ledit dispositif de commutation comportant
- un premier étage (1) comprenant plusieurs modules de sélection de longueurs d'onde (IWS1, IWS2, IWS3) dont les entrées constituent respectivement des ports d'entrée (A1, A2, A3) du dispositif de commutation, chacun desdits modules de sélection de longueurs d'onde comportant une entrée et plusieurs sorties et étant apte à réaliser une fonction de démultiplexage programmable des canaux spectraux reçus sur ladite entrée, sélectivement en fonction de leurs longueurs d'onde respectives, vers lesdites sorties, de manière à aiguiller vers une sortie choisie dudit module un ou plusieurs canaux sélectionnés en fonction d'un signal de commande (C11-C13) parmi les canaux spectraux reçus sur ladite entrée,
- un second étage (2) comprenant au moins un premier module de sélection de longueurs d'onde (CWS2) dont les sorties constituent respectivement des ports de sortie (Q1,...Qi,...Qa) du dispositif de commutation, ledit ou chaque module de sélection de longueurs d'onde comportant une entrée et plusieurs sorties et étant apte à réaliser une fonction de démultiplexage programmable des canaux spectraux reçus sur ladite entrée, sélectivement en fonction de leurs longueurs d'onde respectives, vers lesdites sorties, de manière à aiguiller vers une sortie choisie dudit module un ou plusieurs canaux sélectionnés en fonction d'un signal de commande (C21-C26) parmi les canaux spectraux reçus sur ladite entrée, et

- un étage intermédiaire (3) réalisant un couplage de l'entrée dudit premier module de sélection de longueurs d'onde (CWS2) du second étage à la fois à une première sortie d'un premier module de sélection de longueurs d'onde (IWS1) du premier étage et à une première sortie d'un second module de sélection de longueurs d'onde (IWS2) du premier étage.

2. Dispositif de commutation selon la revendication 1, **caractérisé en ce que** ledit second étage (2) comprend un second module de sélection de longueurs d'onde (CWS3) et **en ce que** ledit étage intermédiaire (3) réalise un couplage de l'entrée dudit second module de sélection de longueurs d'onde (CWS3) du second étage (2) à la fois à une seconde sortie dudit premier module de sélection de longueurs d'onde (IWS1) du premier étage et à une seconde sortie dudit second module de sélection de longueurs d'onde (IWS2) du premier étage (1).

3. Dispositif de commutation selon la revendication 2, **caractérisé en ce que** ledit étage intermédiaire comporte des premier et second coupleurs en étoile (SC1, SC2) ayant chacun plusieurs entrées et plusieurs sorties, et **en ce que**

   - lesdites premières sorties desdits premier et second modules de sélection de longueurs d'onde (IWS1, IWS2) du premier étage sont couplées respectivement à deux entrées du premier coupleur (SC1),
   - lesdites secondes sorties desdits premier et second modules de sélection de longueurs d'onde (IWS1, IWS2) du premier étage sont couplées respectivement à deux entrées du second coupleur (SC2), et
   - chaque sortie de chaque coupleur est couplée à une entrée d'un module de sélection de longueurs d'onde associé du second étage.

4. Dispositif de commutation selon la revendication 3, **caractérisé en ce que** deux au moins desdits modules de sélection de longueurs d'onde du second étage associés à un même coupleur sont conçus pour traiter des bandes de longueurs d'onde disjointes.

5. Dispositif de commutation selon l'une des revendications 1 à 4, **caractérisé en ce que** ledit premier étage comprenant au moins n modules de sélection de longueurs d'onde (IWS1-IWS3) et ledit second étage comprenant au moins s modules de sélection de longueurs d'onde (CWS1-CWS8), ledit étage intermédiaire (3) comporte au moins s coupleurs en étoile (SC1, SC2, SC3) ayant chacun au moins n entrées et au moins une sortie associée à l'un desdits s modules de sélection de longueurs d'onde du second étage, et **en ce que**

   - chaque sortie de chaque coupleur est couplée à une entrée d'un module de sélection de longueurs d'onde associé du second étage, et
   - n entrées de chaque coupleur sont couplées à n sorties respectives de n modules de sélection de longueurs d'onde distincts du premier étage, chacune de ces sorties étant couplée à une entrée d'un seul coupleur.

6. Dispositif de commutation optique (PP') pour aiguiller sélectivement des signaux reçus par des ports d'entrée vers des ports de sortie sélectionnés en fonction d'une commande, comportant :

   - des ports d'entrée (Q'1,...Q'i,...Q'a) prévus pour recevoir respectivement des signaux optiques d'entrée portés par des longueurs d'onde respectives,
   - des ports de sortie (A'1, A'2, A'3),
   - ledit dispositif de commutation comprenant
   - un premier étage (2') comprenant au moins un premier module de sélection de longueurs d'onde ou multiplexeur (CWS2) dont les entrées constituent des ports d'entrée (Q'1,...Q'i,...Q'a) du dispositif de commutation, ledit ou chaque module de sélection de longueurs d'onde comportant plusieurs entrées et une sortie et étant apte à réaliser une fonction de multiplexage programmable des canaux spectraux reçus sur lesdites entrées, sélectivement en fonction des longueurs d'onde des signaux reçus et des entrées respectives, vers ladite sortie, de manière à aiguiller vers ladite sortie un ou plusieurs canaux sélectionnés en fonction d'un signal de commande (C21-C26) parmi les canaux reçus sur lesdites entrées,
   - un second étage (1') comprenant plusieurs modules de sélection de longueurs d'onde (IWS1, IWS2) dont les sorties constituent respectivement des ports de sortie (A'1, A'2, A'3) du dispositif de commutation, chacun desdits modules de sélection de longueurs d'onde comportant plusieurs entrées et une sortie et étant apte à réaliser une fonction de multiplexage programmable des canaux spectraux reçus sur lesdites entrées, sélectivement en fonction des longueurs d'onde des signaux reçus et des entrées respectives, vers ladite sortie, de manière à aiguiller vers ladite sortie un ou plusieurs canaux sélectionnés en fonction d'un signal de commande (C11-C13) parmi les canaux reçus sur lesdites entrées, et

- un étage intermédiaire (3') réalisant le couplage de la sortie dudit premier module de sélection de longueurs d'onde ou multiplexeur (CWS2) du premier étage à la fois à une première entrée d'un premier module de sélection de longueurs d'onde (IWS1) du second étage et à une première entrée d'un second module de sélection de longueurs d'onde (IWS2) du second étage.

7. Dispositif de commutation selon la revendication 6, **caractérisé en ce que** ledit premier étage (2') comprend un second module de sélection de longueurs d'onde ou multiplexeur (CWS3) et **en ce que** ledit étage intermédiaire (3') réalise un couplage de la sortie dudit second module de sélection de longueurs d'onde ou multiplexeur (CWS3) du premier étage (2') à la fois à une seconde entrée dudit premier module de sélection de longueurs d'onde (IWS1) du second étage et à une seconde entrée dudit second module de sélection de longueurs d'onde (IWS2) du second étage (1').

8. Dispositif de commutation selon la revendication 7, **caractérisé en ce que** ledit étage intermédiaire comporte des premier et second coupleurs en étoile (SC1, SC2) ayant chacun plusieurs entrées et plusieurs sorties, et **en ce que**

   - lesdites premières entrées desdits premier et second modules de sélection de longueurs d'onde (IWS1, IWS2) du second étage sont couplées respectivement à deux sorties du premier coupleur (SC1),
   - lesdites secondes entrées desdits premier et second modules de sélection de longueurs d'onde (IWS1, IWS2) du second étage sont couplées respectivement à deux sorties du second coupleur (SC2), et
   - chaque entrée de chaque coupleur est couplée à une sortie d'un module de sélection de longueurs d'onde ou multiplexeur associé du premier étage.

9. Dispositif de commutation selon la revendication 8, **caractérisé en ce que** deux au moins desdits modules de sélection de longueurs d'onde ou multiplexeurs du premier étage associés à un même coupleur sont conçus pour traiter des bandes de longueurs d'onde disjointes.

10. Dispositif de commutation selon l'une des revendications 6 à 9, **caractérisé en ce que** ledit second étage comprenant au moins n modules de sélection de longueurs d'onde (IWS1-IWS3) et ledit premier étage (CWS1-CWS8) comprenant au moins s modules de sélection de longueurs d'onde ou multiplexeurs, ledit étage intermédiaire (3') comporte au moins s coupleurs en étoile (SC1, SC2, SC3) ayant chacun au moins n sorties et au moins une entrée associée à l'un desdits s modules de sélection de longueurs d'onde ou multiplexeurs du premier étage, et **en ce que**

   - chaque entrée de chaque coupleur est couplée à une sortie d'un module de sélection de longueurs d'onde ou multiplexeur associé du premier étage, et
   - n sorties de chaque coupleur sont couplées à n entrées respectives de n modules de sélection de longueurs d'onde distincts du second étage, chacune de ces entrées étant couplée à une sortie d'un seul coupleur.

11. Noeud de commutation pour réseau de transmission optique dans lequel sont couplés en cascade un panneau d'interconnexion d'entrée (PP), une interface de conversion "optique-électrique" (RX), un commutateur électronique (ESW), une interface de conversion "électrique-optique" (TX) et un panneau d'interconnexion de sortie (PP'), **caractérisé en ce que** ledit panneau d'interconnexion d'entrée (PP) est conforme à l'une des revendications 1 à 5, et/ou ledit panneau d'interconnexion de sortie (PP') est conforme à l'une des revendications 6 à 10.

12. Réseau de transmission optique, **caractérisé en ce qu'**il comporte au moins noeud de commutation selon la revendication 11.

**Patentansprüche**

1. Optische Schaltvorrichtung (PP) zum selektiven Lenken der an den Eingangsports ankommenden Spektralkanäle an die jeweiligen in Abhängigkeit von einem Befehl ausgewählten Ausgangsports, umfassend:

   - Eingangsports (A1, A2, A3), vorgesehen jeweils für den Empfang optischer Multiplex-Eingangssignale (WM1, WM2, WM3), von denen jedes gebildet wird aus Spektralkanälen, die von betreffenden Wellenlängen getragen werden,
   - Ausgangsports (Q1,...Qi,...Qa),
   - wobei besagte Schaltvorrichtung umfasst

- eine erste Stufe (1), die mehrere wellenlängenselektive Module (IWS1, IWS2, IWS3) aufweist, deren Eingänge jeweils Eingangsports (A1, A2, A3) der Schaltvorrichtung darstellen, wobei besagte wellenlängenselektiven Module über einen Eingang und mehrere Ausgänge verfügen und geeignet sind, eine programmierbare Demultiplex-Funktion der an besagtem Eingang empfangenen Spektralkanäle selektiv in Abhängigkeit ihrer betreffenden Wellenlängen in Richtung besagter Ausgänge so auszuführen, dass ein oder mehrere in Abhängigkeit von einem Steuersignal (C11-C13) ausgewählte Spektralkanäle, die an besagtem Eingang empfangen werden, in Richtung eines durch besagtes Modul gewählten Ausgangs gelenkt werden,
- zweite Stufe (2), die zumindest ein erstes wellenlängenselektives Modul (CWS2) aufweist, dessen jeweiligen Ausgänge die Ausgangsports (Q1,...Qi,...Qa) der Schaltvorrichtung darstellen, wobei besagtes bzw. jedes wellenlängenselektives Modul über einen Eingang und mehrere Ausgänge verfügt und geeignet ist, eine programmierbare Demultiplex-Funktion der an besagtem Eingang empfangenen Spektralkanäle selektiv in Abhängigkeit ihrer betreffenden Wellenlängen in Richtung besagter Ausgänge so auszuführen, dass ein bzw. mehrere in Abhängigkeit von einem Steuersignal (C21-C26) ausgewählte Spektralkanäle, die am besagten Eingang empfangen werden, in Richtung eines gewählten Ausgangs besagten Moduls gelenkt werden, und
- Zwischenstufe (3), die eine Eingangskopplung besagten ersten wellenlängenselektiven Moduls (CWS2) von der zweiten Stufe einmal an einen ersten Ausgang eines ersten wellenlängenselektiven Moduls (IWS1) der ersten Stufe und an einen ersten Ausgang eines zweiten wellenlängenselektiven Moduls (IWS2) der ersten Stufe ausführt.

2. Schaltvorrichtung nach Anspruch 1, **dadurch gekennzeichnet, dass** die besagte zweite Stufe (2) ein zweites wellenlängenselektives Modul (CWS3) aufweist und die besagte Zwischenstufe (3) eine Kopplung des Eingangs besagten zweiten wellenlängenselektiven Moduls (CWS3) von der zweiten Stufe (2) einmal an einen zweiten Ausgang besagten ersten wellenlängenselektiven Moduls (IWS1) der ersten Stufe und an einen zweiten Ausgang besagten zweiten wellenlängenselektiven Moduls (IWS2) der ersten Stufe (1) ausführt.

3. Schaltvorrichtung nach Anspruch 2, **dadurch gekennzeichnet, dass** die besagte Zwischenstufe erste und zweite Sternkoppler (SC1, SC2) aufweist, wobei jeder über mehrere Eingänge und mehrere Ausgänge verfügt, sowie dadurch, dass

- die besagten ersten Ausgänge besagter erster und zweiter wellenlängenselektiver Module (IWS1, IWS2) der ersten Stufe jeweils an zwei Eingänge des ersten Kopplers (SC1) gekoppelt sind,
- die besagten zweiten Ausgänge besagter erster und zweiter wellenlängenselektiver Module (IWS1, IWS2) der ersten Stufe jeweils an zwei Eingänge des zweiten Kopplers (SC2) gekoppelt sind und
- jeder Ausgang jedes Kopplers an einen Eingang eines wellenlängenselektiven Moduls, das der zweiten Stufe angehört, gekoppelt ist.

4. Schaltvorrichtung nach Anspruch 3, **dadurch gekennzeichnet, dass** mindestens zwei besagter wellenlängenselektiver Module der zweiten Stufe, die einem gleichen Koppler angehören, so gestaltet sind, dass getrennte Wellenlängenbänder verarbeitet werden.

5. Schaltvorrichtung nach den Ansprüchen 1 bis 4, **dadurch gekennzeichnet, dass** die besagte erste Stufe zumindest n wellenlängenselektive Module (IWS1-IWS3) aufweist, die besagte zweite Stufe mindestens s wellenlängenselektive Module (CWS1-CWS8) und die besagte Zwischenstufe (3) mindestens s Sternkoppler (SC1, SC2, SC3) beinhaltet, wobei jeder mindestens n Eingänge und zumindest einen Ausgang hat, der an eines der besagten s wellenlängenselektiven Module der zweiten Stufe angeschlossen ist, und

- jeder Ausgang jedes einzelnen Kopplers an einen Eingang eines wellenlängenselektiven Moduls in Verbindung mit der zweiten Stufe gekoppelt ist und
- n Eingänge jedes Kopplers an betreffende Ausgänge von n getrennten wellenlängenselektiven Modulen der ersten Stufe gekoppelt sind, wobei jeder dieser Ausgänge an einen Eingang eines einzigen Kopplers gekoppelt ist.

6. Optische Schaltvorrichtung (PP') zum selektiven Lenken der durch die Eingangsports empfangenen Signale an die ausgewählten Ausgangsports durch eine Steuerung, umfassend:

- Eingangsports (Q'1,...Q'i,...Q'a), die zum Empfang der betreffenden optischen Signale, die durch die jeweiligen Wellenlängen getragen werden, vorgesehen sind,
- Ausgangsports (AI, A'2, A'3),
- besagte Schaltvorrichtung, bestehend aus
- einer ersten Stufe (2'), die mindestens ein erstes wellenlängenselektives Modul bzw. Multiplexer (CWS2) umfasst, dessen Eingänge die Eingangsports (Q'1,...Q'i,...Q'a) der Schaltvorrichtung bilden, wobei das besagte bzw. jedes wellenlängenselektives Modul über mehrere Eingänge und einen Ausgang verfügt und geeignet ist, eine programmierbare Demultiplex-Funktion der an den besagten Eingängen empfangenen Spektralkanäle selektiv in Abhängigkeit ihrer betreffenden Wellenlängen in Richtung besagter Ausgänge so auszuführen, dass ein oder mehrere in Abhängigkeit von einem Steuersignal (C21-C26) ausgewählte Spektralkanäle, die an besagtem Eingang empfangen werden, in Richtung eines durch besagtes Modul gewählten Ausgangs gelenkt werden,

- eine zweite Stufe (1'), die mehrere wellenlängenselektive Module (IWS1, IWS2) aufweist, deren jeweiligen Ausgänge die Ausgangsports (A'1 , A'2, A'3) der Schaltvorrichtung darstellen, wobei besagte wellenlängenselektive Module über mehrere Eingänge und einen Ausgang verfügen und geeignet sind, eine programmierbare Demultiplex-Funktion der an besagtem Eingang empfangenen Spektralkanäle selektiv in Abhängigkeit ihrer betreffenden Wellenlängen in Richtung besagten Ausgangs so auszuführen, dass ein bzw. mehrere in Abhängigkeit von einem Steuersignal (C11-C13) ausgewählte Spektralkanäle, die an besagten Eingängen empfangen werden, in Richtung eines gewählten Ausgangs besagten Moduls gelenkt werden, und

- eine Zwischenstufe (3'), die eine Ausgangskopplung besagten ersten wellenlängenselektiven Moduls oder Multiplexers (CWS2) von der ersten Stufe einmal an einen ersten Eingang eines ersten wellenlängenselektiven Moduls (IWS1) der zweiten Stufe und an einen ersten Eingang eines zweiten wellenlängenselektiven Moduls (IWS2) der zweiten Stufe ausführt.

**7.** Schaltvorrichtung nach Anspruch 6, **dadurch gekennzeichnet, dass** die besagte erste Stufe (2') ein zweites wellenlängenselektives Modul oder Multiplexer (CWS3) umfasst und dass die besagte Zwischenstufe (3') eine Kopplung besagten zweiten wellenlängenselektiven Moduls oder Multiplexers (CWS3) der ersten Stufe (2') sowohl an einen zweiten Eingang besagten ersten wellenlängenselektiven Moduls (IWS1) der zweiten Stufe und an einen zweiten Eingang besagten wellenlängenselektiven Moduls (IWS2) der zweiten Stufe (1') ausführt.

**8.** Schaltvorrichtung nach Anspruch 7, **dadurch gekennzeichnet, dass** die besagte Zwischenstufe die ersten und zweiten Sternkoppler (SC1, SC2) umfasst, wobei jeder von ihnen mehrere Eingänge und mehrere Ausgänge hat und dadurch, dass

- die besagten ersten Eingänge besagter erster und zweiter wellenlängenselektiver Module (IWS1, IWS2) der zweiten Stufe jeweils an zwei Ausgänge des ersten Kopplers (SC1) gekoppelt sind,

- die besagten zweiten Eingänge besagter erster und zweiter wellenlängenselektiver Module (IWS1, IWS2) der zweiten Stufe jeweils an zwei Ausgänge des zweiten Kopplers (SC2) gekoppelt sind, und

- jeder Eingang eines jeden Kopplers an einen Ausgang eines wellenlängenselektiven Moduls bzw. Multiplexers der ersten Stufe gekoppelt ist.

**9.** Schaltvorrichtung nach Anspruch 8, **dadurch gekennzeichnet, dass** zumindest zwei der wellenlängenselektiven Module der ersten Stufe, die einem gleichen Koppler zugehören, gestaltet sind zur Verarbeitung von getrennten Wellenlängenbändern.

**10.** Schaltvorrichtung nach einem der Ansprüche 6 bis 9, **dadurch gekennzeichnet, dass** die besagte zweite Stufe mindestens n wellenlängenselektive Module (IWS1-IWS3) aufweist, die besagte erste Stufe (CWS1-CWS8) mindestens s wellenlängenselektive Module bzw. Multiplexer und die besagte Zwischenstufe (3') mindestens s Sternkoppler (SC1, SC2, SC3) umfasst, wobei jeder mindestens n Ausgänge und zumindest einen Ausgang hat, der mit einem der besagten s wellenlängenselektiven Module bzw. Multiplexer der ersten Stufe verbunden ist und **dadurch gekennzeichnet, dass**

- jeder Eingang eines jeden Kopplers an einen Ausgang eines wellenlängenselektiven Moduls bzw. Multiplexers in Verbindung mit der ersten Stufe gekoppelt ist und

- n Ausgänge jedes Kopplers an n betreffende Eingänge der jeweiligen n wellenlängenselektiven Module der zweiten Stufe gekoppelt sind, wobei jeder dieser Eingänge an einen Ausgang eines einzigen Kopplers gekoppelt ist.

**11.** Vermittlungsknoten für ein optisches Übertragungsnetzwerk, in dem ein Eingangs-Steckfeld (PP), eine optisch-elektrische Konvertierungsschnittstelle (RX), ein elektronischer Umschalter (ESW), eine elektrisch-optische Konvertierungsschnittstelle (TX) und ein Ausgangs-Steckfeld (PP') kaskadenförmig gekoppelt sind, **dadurch gekennzeichnet, dass** das besagte Eingangs-Steckfeld (PP) einem der Ansprüche 1 bis 5 entspricht und/oder das besagte Ausgangs-Steckfeld (PP') einem der Ansprüche 6 bis 10.

**12.** Optisches Übertragungsnetzwerk, **dadurch gekennzeichnet, dass** es mindestens einen Vermittlungsknoten gemäß Anspruch 11 aufweist.

**Claims**

1. An optical switching device (PP) for selectively routing spectral channels received by input ports to respective output ports selected based on a command, comprising:

    - input ports (A1, A2, A3) provided to receive multiplex input optical signals (WM1, WM2, WM3), respectively, each comprised of spectral channels carried by respective wavelengths,
    - output ports (Q1, ... Qi, ... Qa),
    - said switching device comprising:
    - a first stage (1) comprising multiple wavelength selection modules (IWS1, IWS2, IWS3) whose inputs respectively constitute input ports (A1, A2, A3) of the switching device, each of said wavelength selection modules comprising an input and multiple outputs and being capable of carrying out a function of programmable demultiplexing of the spectral channels received at said input, selectively based on their respective wavelengths, to said outputs, so as to route to a chosen output of said module one or more channels selected based on a command signal (C11-C13) from among the spectral channels received at said input,
    - a second stage (2) comprising at least one first wavelength selection module (CWS2) whose outputs respectively constitute output ports (Q1, ... Qi, ... Qa) of the switching device, said or each wavelength selection module comprising an input and multiple outputs and being able to carry out a function of programmable demultiplexing of the spectral channels received at said input, selectively based on their respective wavelengths, to said outputs, so as to route to a chosen output of said module one or more channels selected based on a command signal (C21-C26) from among the spectral channels received at said input, and
    - an intermediate stage (3) coupling the input of said first wavelength selection module (CWS2) of the second stage both to a first output of a first wavelength selection module (IWS1) of the first stage and to a first output of a second wavelength selection module (IWS2) of the first stage.

2. A switching device according to claim 1, **characterized in that** said second stage (2) comprises a second wavelength selection module (CWS3) and **in that** said intermediate stage (3) couples the input of said second wavelength selection module (CWS3) of the second stage (2) both to a second output of said first wavelength selection module (IWS1) of the first stage and to a second output of said second wavelength selection module (IWS2) of the first stage (1).

3. A switching device according to claim 2, **characterized in that** said intermediate stage comprises first and second star couplers (SC1, SC2) each having multiple inputs and multiple outputs, and **in that**

    - said first outputs of said first and second wavelength selection modules (IWS1, IWS2) of the first stage are respectively coupled to two inputs of the first coupler (SC1), and
    - said second outputs of said first and second wavelength selection modules (IWS1, IWS2) of the first stage are respectively coupled to two inputs of the second coupler (SC2), and
    - each output of each coupler is coupled to an input of an associated wavelength selection module of the second stage.

4. A switching device according to claim 3, **characterized in that** at least two of said wavelength selection modules of the second stage associated with a single coupler are designed to process different wavelength bands.

5. A switching device according to one of the claims 1 to 4, **characterized in that** said first stage comprising at least n wavelength selection modules (IWS1-IWS3) and said second stage comprising at least s wavelength selection modules (CWS1-CWS8), said intermediate stage (3) comprises at least s star couplers (SC1, SC2, SC3), each having at least *n* inputs and at least one output associated with one of said *s* wavelength selection modules of the second stage, and **in that**

    - each output of each coupler is coupled to an input of an associated wavelength selection module of the second stage, and
    - *n* inputs of each coupler are coupled to n respective outputs of *n* distinct wavelength selection modules of the first stage, each of those outputs being coupled to an input of a single coupler.

6. An optical switching device (PP') to selectively route signals received by input ports to selected output ports based on a command, comprising:

    - input ports (Q'1, ... Q'i, ... Q'a) provided to respectively receive optical input signals carried by respective wavelengths,
    - output ports (A'1, A'2, A'3),
    - said switching device comprising:
    - a first stage (2') comprising at least a first wavelength selection module or multiplexer (CWS2) whose inputs constitute input ports (Q'1,... Q'2, ... Q'a) of the switching device, said or each wavelength selection module comprising multiple inputs and an output and being capable of carrying out a function of programmable multiplexing of the spectral channels received at said inputs, selectively based on the wavelengths of the received signals and on the respective inputs, to said output, so as to route to said output one or more channels selected based on a command signal (C21-C26) from among the channels received at said inputs,

- a second stage (1') comprising multiple wavelength selection modules (IWS1, IWS2) whose outputs respectively constitute output ports (A'1, A'2, A'3) of the switching device, each of said wavelength selection modules comprising multiple inputs and an output and being capable of carrying out a function of programmable multiplexing of the spectral channels received at said inputs, selectively based on the wavelengths of the received signals and on the respective inputs, to said output, so as to route to said output one or more channels selected based on a command signal (C11-C13) from among the channels received at said inputs, and

- an intermediate stage (3') coupling the output of said first wavelength selection module or multiplexer (CWS2) of the first stage both to a first input of a first wavelength selection module (IWS1) of the second stage and to a first input of a second wavelength selection module (IWS2) of the second stage.

7. A switching device according to claim 6, **characterized in that** said first stage (2') comprises a second wavelength selection module or multiplexer (CWS3) and **in that** said intermediate stage (3') couples the output of said second wavelength selection module or multiplexer (CWS3) of the first stage (2') both to a second input of said first wavelength selection module (IWS1) of the second stage and to a second input of said wavelength selection module (IWS2) of the second stage (1').

8. A switching device according to claim 7, **characterized in that** said intermediate stage comprises first and second star couplers (SC1, SC2) each having multiple inputs and multiple outputs, and **in that**

- said first inputs of said first and second wavelength selection modules (IWS1, IWS2) of the second stage are respectively coupled to two outputs of the first coupler (SC1),
- said second inputs of said first and second wavelength selection modules (IWS1, IWS2) of the second stage are respectively coupled to two outputs of the second coupler (SC2), and
- each input of each coupler is coupled to an output of an associated wavelength selection module or multiplexer of the first stage.

9. A switching device according to claim 8, **characterized in that** at least two of said wavelength selection modules or multiplexers of the first stage associated with a single coupler are designed to process different wavelength bands.

10. A switching device according to one of the claims 6 to 9, **characterized in that** said second stage comprising at least *n* wavelength selection modules (IWS1-IWS3) and said first stage (CWS1-CWS8) comprising at least s wavelength selection modules or multiplexers, said intermediate stage (3') comprises at least *s* star couplers (SC1, SC2, SC3) each having at least n outputs and at least one input associated with one of said *s* wavelength selection modules or multiplexers of the first stage, and **in that**

- each input of each coupler is coupled to an output of an associated wavelength selection module or multiplexer of the first stage, and
- n outputs of each coupler are coupled to *n* respective inputs of *n* different wavelength selection modules of the second stage, each of those inputs being coupled to an output of a single coupler.

11. A switching node for an optical transmission network, in which an input patch panel (PP), an "optical-electrical" conversion interface (RX), an electronic switch (ESW), an "electrical-optical" conversion interface (TX) and an output patch panel (PP') are coupled in cascading fashion, **characterized in that** said input patch panel (PP) is according to one of the claims 1 to 5, and/or said output patch panel (PP') is according to one of the claims 6 to 10.

12. An optical transmission network, **characterized in that** it comprises at least a switching node according to claim 11.

FIG_1

FIG_2

PP
(PP')  FIG_3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1054572 A

- US 2002021467 A

**Littérature non-brevet citée dans la description**

- **T. DUCELLIER.** *The MWS 1x4 : A High Performance Wavelength Switching Building Block*